# EUROPEAN PATENT SPECIFICATION

(11) **EP 3 593 085 B1**
(45) Date of publication and mention of the grant of the patent: **07.10.2020**
(21) Application number: 18732653.3
(22) Date of filing: 23.05.2018
(51) Int. Cl.: G01B 11/25, G01N 21/88

(54) **MOBILE INSPECTION TUNNEL AND CORRESPONDING INSTALLATION METHOD**
MOBILER INSPEKTIONSTUNNEL UND ENTSPRECHENDES INSTALLATIONSVERFAHREN
TUNNEL D'INSPECTION MOBILE ET PROCÉDÉ D'INSTALLATION CORRESPONDANT

(43) Date of publication of application: 15.01.2020
(73) Proprietor: TÜV Rheinland Schaden- und Wertgutachten GmbH, 51105 Köln (DE)
(72) Inventor: SCHULTE, Michael, 44379 Dortmund (DE); RÖCKERS, Christian, 44791 Bochum (DE); FRANKE, Rene, 44869 Bochum (DE)
(74) Representative: Cohausz, Helge B.
(86) International application number: PCT/EP2018/000272
(87) International publication number: WO 2019/223847

(56) References cited:
- DE-A1- 10 129 972
- DE-A1-102009 038 965
- DE-U1-202004 009 194
- JP-A- 2000 136 917

## Description

### Technical field

The invention relates to a mobile inspection tunnel for illuminating reflective surfaces of objects positioned in the inner inspection area of the tunnel, particularly for illuminating the reflective surfaces of vehicles, the tunnel having opposite openings on both ends, the openings being spaced along the longitudinal extension of the tunnel, the tunnel comprising at least one modular tunnel element between the openings, preferably comprising several modular tunnel elements connected in a row between the openings, each modular tunnel element having a double-walled tunnel wall spanning the inner inspection area, the tunnel wall comprising: at least one LED support sheet, the at least one LED support sheet forming the exterior wall of the double-walled tunnel wall, the at least one LED support sheet being at least partially curved, preferably at least in its upper part being curved in a plane perpendicular to the longitudinal extension, the at least one LED support sheet supporting a plurality of electrically controllable light sources arranged on the interior surface of the sheet, particularly the light sources being arranged in rows and columns, and configured to emit light towards the inner inspection area, the tunnel furthermore comprising at least one translucent, preferably opaque light scattering sheet, the at least one light scattering sheet forming the interior wall of the double-walled tunnel wall, the at least one light scattering sheet being at least partially curved, preferably at least in its upper part being curved in a plane perpendicular to the longitudinal extension, the at least one light scattering sheet being arranged on the inside of the LED support sheet in a distance to the LED support sheet along its entire extension, the at least one light scattering sheet being configured to be illuminated by the light emitted from the light sources of the LED support sheet and to scatter the light towards the inspection area.

An inspection tunnel of this kind is generally known from the documents DE 20 2004 009 U1, DE 101 29 972 A1 and DE 10 2009 038 965 A1.

### Background of the invention

An inspection tunnel may be typically used for illuminating the reflective surfaces of vehicles or any other objects. The tunnel may have opposite openings on both ends, the openings being spaced along the longitudinal extension of the tunnel. Accordingly, a vehicle like a car or any other objects having reflective surfaces may enter the tunnel through one of these openings and may be positioned in the inspection area.

The inspection area is typically understood to be the ground surface area spanned by the tunnel on which the object stands during the inspection process. After inspection the object may leave the tunnel through the other opening. A queue of objects may be build up at the first opening and the waiting objects may be inspected one after the other.

It is not necessary for the invention to have a tunnel with two openings, namely entrance and exit opening. Such a tunnel may also have just one opening, performing entry and exit through this opening.

Preferably the existing at least one opening may be closed during inspection of the object by a door.

The tunnel, particularly the tunnel wall and the at least one door, preferably a respective door at each of the ends, may be equipped with illumination devices for illuminating the object in the tunnel.

It is known in the state of the art to perform an indirect illumination of the object using one or more projectors in the tunnel for illuminating directly the tunnel walls that reflect and / or scatter the light of the at least one projector towards the object. Such a projector may generate a light pattern on the tunnel wall, particularly a light pattern having a sinusoidal intensity variation in at least one direction, preferably in two perpendicular directions. Such a pattern may be changed in time in regard to the frequency, i.e. the spatial spacing of the intensity maxima.

According to another known state of the art the tunnel wall may form itself an illumination device, for example by integrating illumination devices into the tunnel wall and/or door.

Tunnels of the known kind are for example used for inspecting a vehicle in regard to damages in the paintwork of a vehicle body, for example damages caused by accidents or hail impacts. It is known to acquire data using one or more cameras that detect the light reflected from a vehicle being illuminated in such a tunnel. The data may be automatically evaluated to detect the amount and severity of damages. Such a method may for example help insurance corporations or leasing agencies in determining a monetary compensation of damages. A method of this kind is for example disclosed in the applicants own patent application DE 10 2010 015 566.

It is furthermore known in the state of the art to use such tunnels as a stationary device. Accordingly, there is a need to bring objects to be inspected to the site of the tunnel.

It is an object of the invention to provide a mobile inspection tunnel that can be moved to any desired location for performing inspection of objects, preferably vehicles. In addition it is furthermore an object to provide a mobile tunnel that is easy to handle, particularly that can be assembled and disassembled with just little effort and preferably can be stowed in a very compact size, for example in a trailer.

### Summary of the invention

This object is solved by a tunnel as mentioned above, wherein the curved area of the LED support sheet is formed into the material of the LED support sheet by elastically bending the LED support sheet from a relaxed planar shape into a bent curved state and the curved area of the light scattering sheet is formed into the material of the light scattering sheet by elastically bending the light scattering sheet from a relaxed planar shape into a bent curved state, both sheets being held in a bent shape by means of a support structure of the modular tunnel element to which at least the LED support sheet is attached, particularly the bent light scattering sheet being supported by the bent LED support sheet.

The curvature of the curved part may be understood to by continuously curved or alternatively may be formed of several successive polygonal parts when regarded in a cross sectional view.

For example the light sources may be arranged in rows and columns. Preferably, a respective light source may be formed of at least one light emitting diode, most preferred of several light emitting diodes having different spectral properties.

The name "LED support sheet" is to be understood as a "Light Emitting Device support sheet", preferably a "Light Emitting Diode support sheet". Also organic light emitting diode are comprised by a light emitting diode.

It is a big advantage of the invention to build a tunnel of one or more modular tunnel elements that may be arranged in a row in order to get the needed length of the tunnel. Depending of the size of objects to be inspected the needed number of tunnel elements may be packed in a trailer or van and moved to the inspection site. The tunnel elements may be connected to each other for example using known quick locking elements. Preferably each one of several tunnel elements is identical in construction.

Furthermore it is an advantage of the mobile tunnel that the double-walled tunnel wall of each modular tunnel element itself forms the illumination device of the tunnel. Preferably the entire tunnel wall of each tunnel element forms an illuminated inner surface of the tunnel. Accordingly, the inspection area in the tunnel is always correctly illuminated since the number of illumination devices automatically scales with the number of tunnel elements.

In a preferred embodiment each tunnel element forms an illumination device having a homogeneous light intensity distribution over the entire surface of the light scattering sheet with less than 30%, preferably less than 10 % intensity variation if illuminated by all light emitting diodes of the led support sheet simultaneously.

In addition each tunnel element may form an illumination device having a sinusoidal light intensity distribution over the entire surface of the light scattering sheet in at last one direction if the light scattering sheet is illuminated with a subset of all light emitting diodes if all switched-on light emitting diodes of this subset are spaced to each other in that direction by at least one non-illuminated light diode. The spacing of the illuminated light emitting diodes by non-illuminated light emitting diodes will affect the spatial frequency of the generated sinusoidal light pattern. Particularly in an embodiment having the plurality of light emitting diodes being arranged in rows and columns, particularly in a matrix configuration provides the advantage that a sinusoidal light pattern may be independently programmed in the two distinct directions of the rows and columns. The spacing between the rows of light emitting diodes may be equal to the spacing of the columns of the light emitting diode. Of course the spacings of rows may also be different to the spacings of the columns.

According to the invention the curved area of the LED support sheet is formed into the material of the LED support sheet by elastically bending the LED support sheet from a relaxed shape, preferably a relaxed planar shape into a bent curved state and the curved area of the light scattering sheet is formed into the material of the light scattering sheet by elastically bending the light scattering sheet from a relaxed planar shape into a bent curved state, both sheets being held in a bent shape by means of a support structure of the modular tunnel element to which at least the LED support sheet is attached, particularly the bent light scattering sheet being supported by the bent LED support sheet.

In this embodiment both sheets of the double-walled tunnel wall are planar in their respective relaxed state. The light scattering sheet may be solely a piece of flat sheet-like material of a translucent, preferably opaque or satinated material, for example polymethylmetacrylate. This sheet will preferably have no further attachments.

The sheet of the led support sheet may also be formed by a piece of a flat sheet-like material, for example polymethylmetacrylate but additionally will carry further attachments like the plurality of light emitting diodes, electrical conductors to provide a power supply and / or supply of control signals and preferably further elements facilitating the attachment of the led support sheet to a support structure and/or the attachment of the light scattering sheet to the led support sheet.

It is an advantage of this embodiment, that both wall forming elements of the double-walled tunnel wall can be stowed in their respective relaxed state, for example in a trailer or van for transportation purposes and may be combined with the support structure to form a respective modular tunnel element.

The mentioned support structure is an element that essentially serves to compensate the internal forces generated in both sheets by bending from their relaxed planar state in the respective curved state. For example the led support sheet will be bent into its curved shape and attached in this state to the support structure. The attachment of the led support sheet to the support structure then prevents the led support sheet to relax. Accordingly the led support sheet maintains its curved shape as long as it is attached to the support structure.

Afterwards the light scattering sheet may be attached to the support structure as well. The order of attaching the sheets to the support structure may also be altered. The light scattering sheet may also be attached to the led support sheet. In any way the internal force generated in the light scattering sheet by bending will also be compensated by the support structure either directly or indirectly via the led support sheet.

The LED support sheet and the light scattering sheet are both configured to automatically relax into its respective planar shape after detaching from the support structure.

In the embodiment is which both sheets are elastically bendable from a planar relaxed state into a curved state the invention may provide that the distance between the light scattering sheet and the led support sheet is maintained essentially constant by means of spacer elements situated between the two sheets. For example the light scattering sheet comprises a plurality of spacer elements extending from the light scattering sheet towards the LED support sheet or the LED support sheet comprises a plurality of spacer elements extending from the LED support sheet towards the light scattering sheet, preferably each spacer having the same length.

In an improvement of this embodiment each spacer has a tapered free end, particularly the tip of the free end being spherically formed. This embodiment assures minimum obstruction of the emitted light, particularly at the location on the respective sheet hit by the spacer end, since at the contact location the spacer has its minimum diameter. A spherically shaped or ball shaped end of the spacer provides less risk of scratches at the contacted surface. Preferably the spacer is attached to the LED support sheet and the tapered end of the spacer contacts the light scattering sheet in a distance given by the spacer length. This provides that the bigger end of the spacer is near the smaller part of the emitted light cone and the smaller part of the spacer is near the spreaded part of the light cone, thus furthermore minimizing the obstruction of the light emitted from the LED support sheet towards the light scattering sheet.

In a first preferred improvement of the embodiment comprising two flexible sheets that automatically relax into a planar state the support structure of a modular tunnel element may simply comprise a flat structure being configured to be put on the ground, the structure having two respective pairs of spaced abutment elements to which the opposite edges of a respective bent sheet are attached. Such an abutment element may be formed of a groove that receives the edges of the respective sheet. The distance between two abutment elements of each pair is smaller than the distance of the opposite edges of the respective sheet in its relaxed planar state. For example the distance between the two abutment elements of a respective pair is equal to or smaller than 2xL/π, L being the length of the respective sheet between the two opposite edges in the relaxed state. These parameters will lead to a bent curved state of the sheets forming a tunnel having an essentially semicircular cross section.

In a second preferred improvement of the embodiment comprising two flexible sheets that automatically relax into a planar state the support structure of a modular tunnel element may comprise an exterior frame spanning the double-walled tunnel wall, the LED support sheet being arranged on the inside of the frame, preferably attached to the frame, particularly in its bent curved state.

Such a frame spanning the double-walled tunnel wall of each tunnel element provides the advantage that the entire construction is more stable, for example in regard to a possible wind load at bad weather conditions.

The frame structure itself may have a curved shape corresponding to the desired curved shape of the sheets, but such a curved shape we lead to a disadvantage for storing purposes.

The frame may preferably comprise two spaced wall elements, particularly planar wall elements, being arranged parallel to each other in the longitudinal extension of the tunnel element and connected at their respective upper ends by means of a roof element, particularly a planar roof element, these elements together forming an essentially U-shaped frame structure, particularly being open towards the ground.

Such a U-shaped frame may be assembled for building the tunnel and disassembled for transportation or storage. Since all parts of the frame are essentially planar elements the storage of these elements is very little space consuming.

Preferably each wall or roof element of the frame structure is composed of several interconnected rods, particularly thus forming an open-meshed frame structure.

In this embodiment a curved area of a LED support sheet is positioned opposite to the joint of a wall element and the roof element, this curved area having no contact to the frame.

The at least one LED support sheet and / or the at least one light scattering sheet of a respective tunnel element may be attached to the frame by clamping or by inserting their edges being spaced in the circumferential direction into respective or common abutment elements of the frame structure.

The frame of a modular tunnel element comprises preferably at least one pair of spaced abutment elements, particularly longitudinally extending groves for each respective LED support sheet and at least one pair of spaced abutment elements, particularly longitudinally extending groves, for each respective light scattering sheet, the abutment elements of each pair having a distance less than the respective distance of the opposing longitudinally extending edges of the respective sheets in their relaxed state and the respective sheets being held in a bent state by inserting their longitudinally extending edges into the abutment elements of the support structure.

In this embodiment the at least one LED support sheet and or the at least one light scattering sheet are preferably held in an engaged state with the abutment elements and/or in contact with the frame only by internal forces exerted from the respective sheet to the abutment elements and/or contacted surfaces of the frame due to the elastic bending of the respective sheet. Accordingly there is no need to assemble these parts by means of additional fixation elements.

According to the invention in a tunnel element two or more LED support sheets and/or two or more light scattering sheets may be successively arranged in the circumferential direction, preferably the upper ends of two sheets engaging a common abutment element of the frame and/or being connected to each other. In this embodiment the entire surface area of a led support sheet or light scattering sheet is divided into several sheet that may be more easily handled.

Furthermore the at least one LED support sheet and/or the at least one light scattering sheet may comprise at least one aperture and a camera facing through the aperture towards the inside of the tunnel element. Such a camera is intended to acquire video data or photo data of the illuminated object, for example a vehicle. The data may be automatically evaluated in regard to damages in the surface of the object as mentioned in the introductory part of the specification.

As mentioned before in a LED support sheet each light source may be formed of a combination of at least three, preferably four light emitting diodes, each light emitting diode being capable of emitting a different light spectrum, preferably the light sources of a row or column being arranged on a common stripe. For example one of the light emitting diode may emit a white light spectrum, the others may emit red, green and blue spectra.

In a furthermore preferred embodiment the light sources of a LED support sheet may be positioned nearest to the edge opposite the edge of a neighbouring LED support sheet have a distance to this edge being half the distance between the light sources on the remaining surface of the LED support sheet. This embodiment assures an equal spacing between light sources of several tunnel elements that are successively arrange in a row to get a total tunnel length being longer that the length of a single tunnel element.

In addition at least one of the edges of two opposite edges of neighbouring LED support sheets and/or light scattering sheets comprises at least one guide element being engaged by the opposite edge. Such a guide element will help to keep the neighbouring sheets aligned.

The entire tunnel will preferably comprises a controller configured for commonly controlling all the light emitting light sources of several LED support sheets, particularly for controlling the generation of specific light patterns extending un-interrupted along the circumferential and lengthwise extension of the several LED support sheets. In order to accomplish a common control of all the light sources of all led support sheets these sheets will preferably be electrically connected to each other. Contact interfaces may be provided for this purpose at the opposite edges of neighbouring led support sheets.

### Description of the drawings

- Figure 1:: depicts an embodiment of a tunnel comprising one or more modular tunnel elements with a self-sustained double-walled tunnel wall, this embodiment does not belong to the invention
- Figure 2: depicts an embodiment of the invention of a tunnel comprising one or more modular tunnel elements with flexible led support sheet and flexible light scattering sheet bent into a curve shape and held in shape by means of a support structure on the ground
- Figure 3: depicts another embodiment of the invention of a tunnel comprising one or more modular tunnel elements with flexible led support sheet and flexible light scattering sheet bent into a curve shape and held in shape by means of a frame like support structure spanning the tunnel
- Figure 4: depicts the arrangement of the sheets and light sources of neighbouring tunnel elements.
- Figure 5: is a flowchart of an example of a process of forming the tunnel.
- Figure 6: is a flowchart of an example of a process of forming the tunnel.

### Detailed description of the drawings

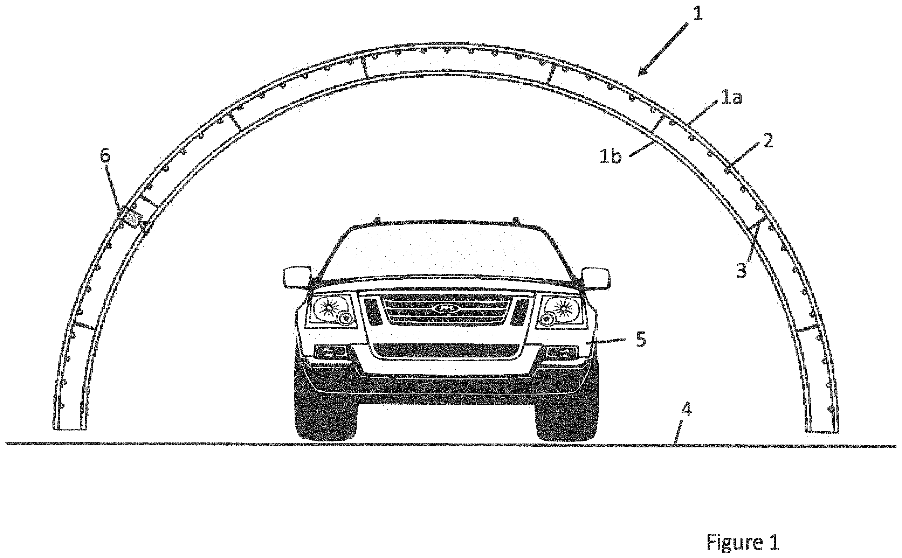

In figure 1, which does not show the invention, the tunnel is shown in a cross sectional view. The tunnel comprises at least one tunnel element, each tunnel element having a double-walled tunnel wall 1 comprising a led support sheet 1a with a plurality of light sources 2, for example light emitting diodes 2. The light emitting diodes may be configured to emit light of a single central wavelength, accordingly may be understood as single color LED. The Light emitting diode may also be configured to emit a white light spectrum. For that purpose a LED may comprise a diode emitting light in the ultraviolet spectrum that is converted to white light by a conversion medium covering the diode or the white light spectrum is generated by several LED's operated simultaneously and adding their respective spectrum, for example by RGB-Led's. Severaly LED's may be comprised on a singly carrier, like a Chip-on board (COB) Led and handled as a single light source.

The Led sources of the Led support sheet are preferably arranged in a row and column configuration, preferably the rows being parallel to the lengthwise extension of the tunnel and the columns being parallel to the circumferential extension of the tunnel. Accordingly a matrix configuration is provided, preferably with each matrix element being selectively controllable. The pitch in the direction of the rows may be different to the pitch in the direction of the column, but preferably both pitches are identical. The pitch is typically 33.33 mm.

The led support sheet forms the exterior wall of the double-walled tunnel wall 1. Furthermore the double-walled tunnel wall 1 comprises a light scattering sheet 1b forming the interior wall of the double-walled tunnel wall 1. Such a light scattering sheet provides its scattering ability for example by means of a satinated surface and / or by means of scattering particles integrated in the material of the sheet. Scattering particles are for example spherically shaped. Such particles may be formed for example of titanium dioxide.

The distance between the two sheets 1a and 1b is defined by the spacer elements 3 that are attached to the led support sheet 1a and extend towards the light scattering sheet 1b and are tapered towards the light scattering sheet 1b. Such a spacer preferably has a circular cross section becoming smaller towards its free end. Preferably the length of a spacer may be chosen between 10 and 100 mm. The material may be metal or the same material as the light scattering sheet. The surface of the spacer may be configured to scatter light, for example by means of a satinated surface, in order to reduce the generation of shadows.

The spacer elements 3 may have equal distance along the circumferential direction of the tunnel wall 1 and / or the longitudinal direction of the tunnel, i.e. the extension of the tunnel between the two openings. Preferably such a distance between the spacers may be chosen between 10 and 120 centimeters.

In this embodiment the two sheets 1a and 1b have a preformed curved shape that essentially corresponds to a semi-circle in this cross sectional view. The shape may be different and it is essentially only necessary that the double-walled tunnel wall 1 spans the inspection area on which in this embodiment a car is position for inspection.

According to this embodiment the double-walled tunnel wall of each tunnel element forms an illumination device since the entire surface of the light scattering sheet 1b is illuminated by the plurality of light sources 2 of the led support sheet 1a. The distance between the sheets 1a and 1b is configured to assure that the areas of the light scattering sheet 1b that are illuminated by each light source are overlapping to generate a homogeneous light distribution over the entire surface of the light scattering sheet having less than 30% intensity variation. In addition to the overlapping of the light cones emitted by the light sources an additional light scattering processes of the received light takes place at the surface of the light scattering sheet and/or in the volume of the material of the light scattering sheet, for example by means of the mentioned satinated surface and/or scattering particles in the material. This improves the uniform light distribution if all light sources are illuminated.

This construction of the double-walled tunnel wall 1 is identical also for all the embodiments of the invention shown in the following figures.

The curved shape of the two sheets 1a and 1b in this embodiment which does not belong to the invention is preformed into the respective sheet. Accordingly the shape shown in the figure 1 is a relaxed state of the double-walled tunnel wall 1 and consequently the double-walled tunnel wall is self-sustained and may be free standing on the ground 4 on which the car 5 is positioned. The two sheets may be separate parts and the double-walled tunnel wall may be realised by sliding the curved light scattering sheet into the curved led support sheet. Alternatively the two sheet may be attached to each other. For example the spacer elements 3 may also be used as attachment elements to which both sheets 1a and 1b are fixed.

The double-walled tunnel wall 1 may also be realised with just one of the two sheets being preformed into the curved shape and the other sheet being elastically bent into the shown curved shape from a relaxed planar shape and attached to the other preformed sheet in order to maintain the bent shape.

Each one of a tunnel element 1 may have a certain length in the longitudinal direction of the tunnel. A length may be chosen preferably to be between 0.3 and 3 meters. Accordingly any desired tunnel length may be achieved by successively arranging several tunnel elements 1 in a row and attaching the tunnel elements 1 to each other to form a stable construction.

By means of cameras 6 being positioned in openings of the double-walled tunnel wall the light reflected from the surface of the car may be recorded and evaluated. The cameras as configured to detect the light emitted by the light sources of the LED support sheet. Damages in the car body or its paintwork may be determined from the recorded data as essentially known in the state of the art, for example as described in DE 10 2010 015 566 of the same applicant.

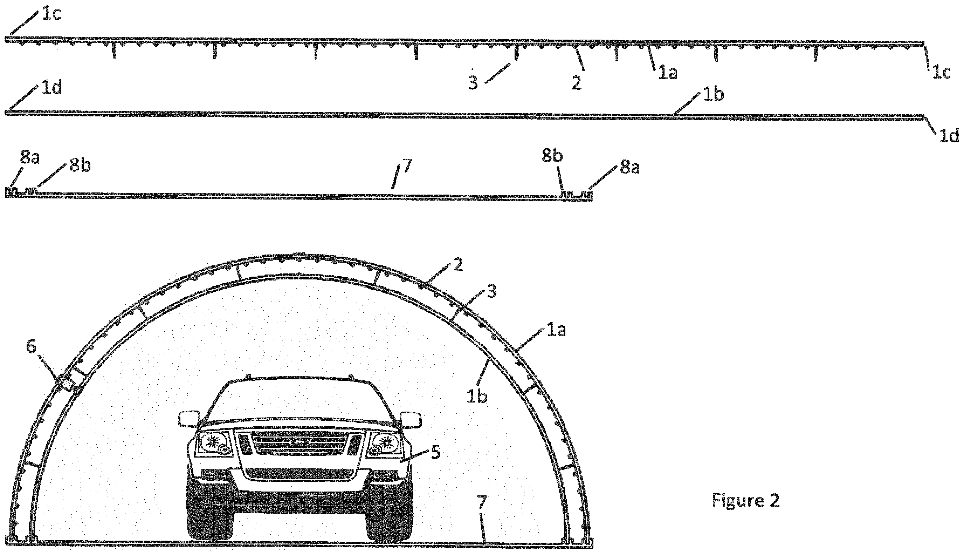

Figure 2 shows an embodiment of the invention. Also in this embodiment the double-walled tunnel wall 1 comprises the led support sheet 1a with a plurality of light sources 2 and the light scattering sheet 1b. Both sheets are spaced by the spacer elements 3.

In contrast to figure 1 the sheets 1a and 1b have a planar relaxed state as shown in the upper part of the figure 2. Accordingly the curved shape is not achieved by a preformed shape but by bending the respective sheet 1a or 1b out of its planar shape.

Both sheets are held in the curved shape by means of a support structure 7 having two pairs of abutments elements 8a and 8b. Each respective pair of abutment elements 8a / 8b are formed as grooves extending in the longitudinal direction of the tunnel and are configured to receive the respective opposite edges 1c or 1d of the respective sheets 1a and 1b after bending the sheets into their respective curved shape. Preferably the grooves span the entire length of the tunnel but may be intermittently spaced as well.

The distance between the two abutment elements of each pair 8a and 8b is smaller than the distance between the opposite edges 1c or 1d of the sheets 1a and 1b. In this specific case the distance is chosen to get an essentially semicircular curved shape of the tunnel in the shown cross sectional view according to the mathematical relationship of circumferential length and diameter of a circle.

By bending the two sheets 1a and 1b into the curved shape internal forces are generated that tend to bring the respective sheet back into the relaxed planar state. The support structure 7 will compensate these forces and accordingly it is the support structure 7 that is configured to maintain the tunnel or the double-walled tunnel wall 1 in the shown erected and curved shape. By simply detaching the edges of the respective sheet 1a and 1b from the abutment elements the sheet will automatically relax back into the planar shape.

Accordingly, the relaxed sheets 1a/1b and the support structure 7 will each have an essential planar shape and may be easily stowed for transportation purposes. A tunnel according to this embodiment may be assembled in short time wherever it is needed.

The support structure 7 may have a longitudinal length corresponding to the longitudinal length of the two sheets of the double-walled tunnel element. Successively attaching several support sheets and inserting several sheets in a row will lead to the desired length of the tunnel. Also in this case the tunnel elements may be attached to each other by locking elements.

As mentioned in regard to figure 1 one or more cameras 6 will serve to acquire data by recording the light reflected from the illuminated car 5 in the tunnel.

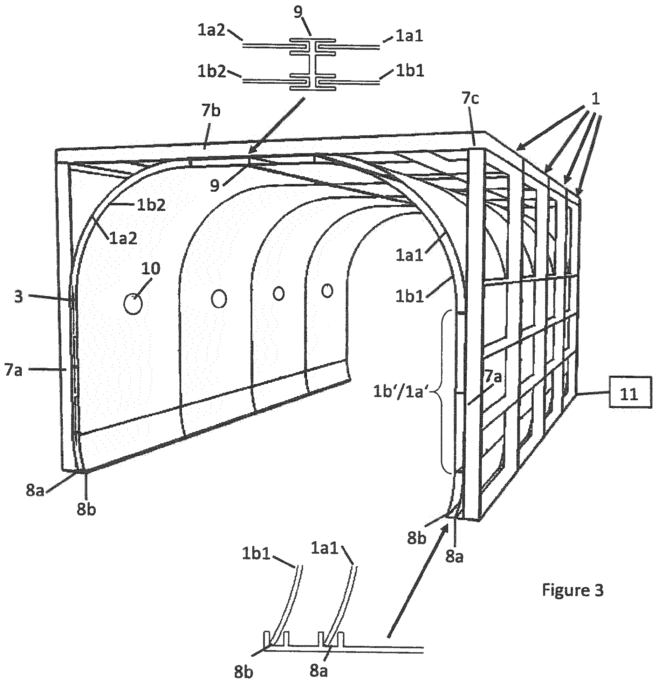

Figure 3 shows another embodiment of the invention. Also in this figure the tunnel wall of a tunnel element 1 is double-walled and comprises the led support sheet 1a and the light scattering sheet 1b, both sheets 1a/1b being spaced by spacer elements 3. The light sources that are arranged on the led support sheet 1a on its interior surface facing the light scattering sheet 1b are not shown in this figure but preferably arranged in a row and column configuration, a row being parallel to the longitudinal extension of the tunnel and a column being perpendicular to it, particularly in the circumferential direction of the tunnel wall.

Several tunnel elements 1 are arranged in a row and interconnected to each other to form a tunnel of a desired length. In this case four tunnel elements 1 are connected. Interconnection may be performed by quick locking connectors arrange on the opposite parts of two tunnel elements facing each other or any other means capable of holding the two tunnel elements in a fixed position to each other. Preferably at least on the inner wall of the double wall of the tunnel, i.e. on the light scattering sheet a light leakage is avoided by a light tight contact between the tunnel elements. This assures that light emitted by the Led support sheet will always be scattered by the light scattering sheet prior to detection by a camera.

The sheets 1a and 1b of the double-walled tunnel wall will both have a relaxed planar shape as shown in the upper part of figure 2 but the support structure 7 is different in this case.

In this embodiment the support structure 7 comprises a frame, the frame being formed of two spaced planar wall elements 7a and a roof element 7b connecting the two wall elements 7a at their upper ends. The wall elements 7a each extend in the longitudinal direction of the tunnel and define the longitudinal length of the respective tunnel element 1. The frame elements, i.e. the two wall elements 7a and the roof element 7b may be attached to each other by means of screws or locking elements and may be detached from each other and easily stowed for transportation.

The assembled frame elements 7a, 7b are u-shaped in the cross sectional view, the "U" being open to the ground 4 on which the tunnel and an object stand.

For assembling the entire tunnel element 1 the led support sheet 1a will be bent from its planar relaxed state to a curved state and attached to the inside of the frame 7. The light scattering sheet 1b will be also bent from its relaxed planar state into the curved state and attached to the frame 7 and the led support sheet 1a.

Attaching of the respective sheets 1a/1b will be performed by simply putting the lower edges of the respective sheets into corresponding abutment elements 8a / 8b formed as a longitudinal groove. These abutments elements are situated at the inside and at the lower end of the wall elements 7a. Due to this position the respective lower part of the received sheets 1a 1b will be bent towards the inner volume of the tunnel. In the shown tunnel elements 1 two LED support sheets 1a1, 1a2 and two light scattering sheets 1b1 and 1b2 are successively arranged in the circumferential direction. The upper ends of two successive sheets 1a1/1a2 and 1b1/1b2 engage a common abutment element 9 of the frame 7. The abutment element 9 will have respective grooves on opposite sides for the led support sheet and the light scattering sheet, the distance of the grooves being the distance of the two sheet in the double-walled tunnel wall and corresponds to the length of the spacer element 3

After assembly of the sheets 1a and 1b to the frame 7 the led support sheet 1a and the light scattering sheet will in this embodiment have a respective straight part 1a'/ 1b' in cross sectional view corresponding to the wall element 7a to which it is attached. The respective curved areas of a LED support sheet 1a and light scattering sheet 1b are positioned opposite to the joint 7c of a wall element 7a and the roof element 7b, this curved area having no contact to the frame 7.

Due to the bending of the sheets 1a/1b from a planar relaxed state to the curved shape internal forces are generated in both sheets, the forces urging the led support sheet 1a to contact the frame 7 and the light scattering sheet 1b to contact the tips of the spacer elements 3 of the led support sheet 1a. Accordingly both sheets 1a/1b are held in place and in the curved shape solely by these internal forces. Of course it is possible to attach the sheets to the frame with bolts or screw or other attachment elements.

Apertures 10 are provided in the double-walled tunnel wall, i.e. preferably in both sheets 1a/1b of this wall to receive a camera for recording the light reflected from the surface of an illuminated object as already discussed in regard to figure 1 and 2. The camera can be positioned in one of several positions. Each position can be chosen based on the measuring area of the illuminated object, overlap of measuring area, full coverage of relevant portions of the illuminated object, or combinations of them. The camera can be removably attached to the aperture. Instead of attaching the camera to an aperture, the camera can be attached to portions of the sheets that do not have apertures, for example, using a suction cup or other adhering device such as a magnet. The camera surface can be made non-reflective, although this is not essential to do so.

It is obvious that by disassembling the tunnel shown in figure 3 all parts of the tunnel will have a planar shape and may be easily stowed for transportation. By means of the exterior frame 7 spanning the double-walled tunnel element 1 of the shown construction is even more stable than the constructions shown in figures 1 and 2 and as such most preferred. In order to assure a light-weight construction the frame 7 is composed several interconnected rods being arranged in a mesh-like structure. The rods may be made of metal, particularly aluminium.

The led support sheets 1a of several tunnel elements 1 may be electrically connected in order to control all light sources of all led support sheets of a tunnel simultaneously. A controller 11 may be provided and connected to the led support sheets 1a for controlling the illumination and the generation of different light patterns, preferably sinusoidal light patterns on the light scattering sheets 1b. All double-walled tunnel walls of the entire tunnel will in this configuration act as a single illumination device.

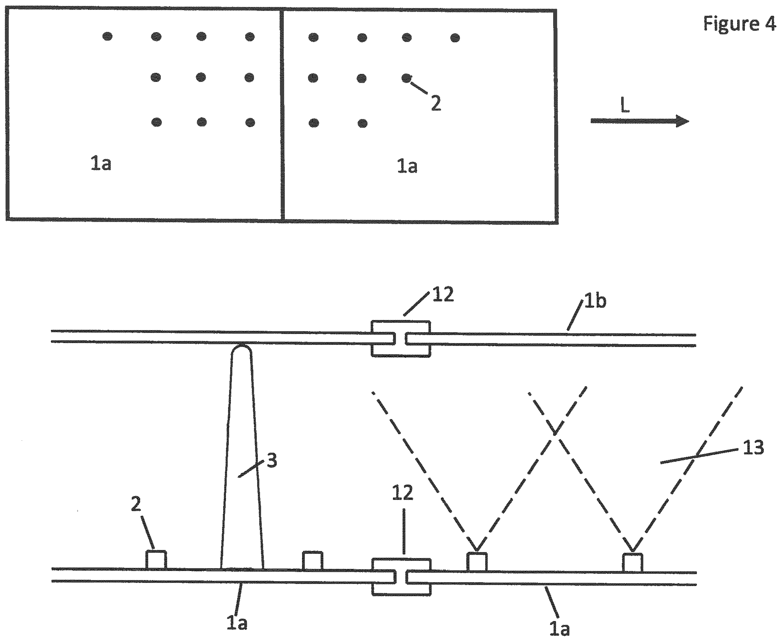

Figure 4 depicts the arrangement of two led support sheets 1a and two light scattering sheets 1b of neighbouring tunnel elements in the longitudinal direction L of the tunnel. The light sources 2 of the two neighbouring sheets 1a are arranged in a matrix like configuration of rows and columns and may be individually controlled by the controller 11 shown in figure 3. The configuration, whether rows and columns or other configuration, can be chosen based on ease of programming and ease of ability to address each light source in the configuration.

Also at the borderline of the two sheets 1a or 1b a shadow free illumination of the light scattering sheets 1b is provided by the fact that the distance of the light sources 2 nearest to the edge of the neighbouring sheets 1a is equal or less than half the distance of the light sources 2 on the remaining area of the sheets 1a. Accordingly, the spacing between the light sources 2 in the direction L is maintained over the entire length of the tunnel. In addition the respective sheets 1a/1b of neighbouring tunnel element may be held aligned by means of guide elements 12 that receive the respectives edges of the sheets.

As shown here the light cones 13 of neighbouring light sources 2 are overlapping due to the selected distance of the sheets that is maintained constant by the spacer elements 3.

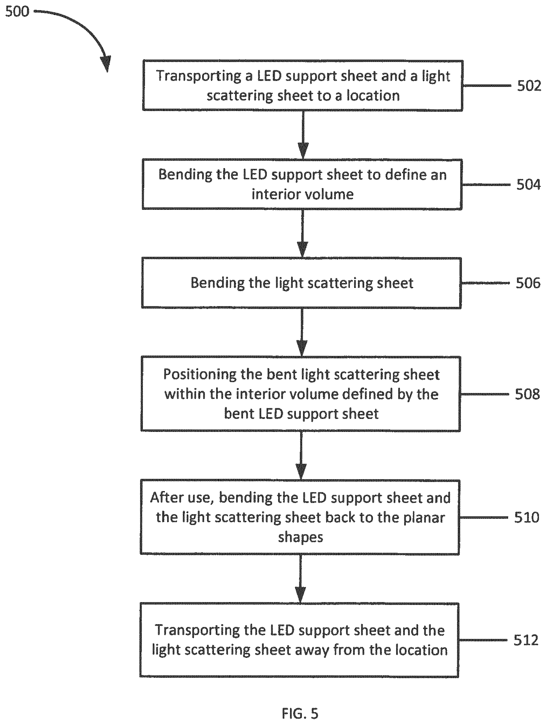

Figure 5 is a flowchart of an example of a process 500 of forming the tunnel. The process 500 can be implemented, for example, to form the tunnel described above with reference to Figure 2. At 502, the respective sheets 1a/1b are transported to a location, for example, a location at which the tunnel is to be formed and used. The respective sheets 1a/1b are in a planar shape, which is a relaxed state of each sheet. In the planar state, the sheets 1a/1b can be transported, for example, on the bed of a flatbed truck or other suitable vehicle to a location at which the tunnel is to be formed. At 504, the LED support sheet 1a can be bent, for example, in a curved shape that defines an interior volume (such as an inverted U-shape). At 506, the light scattering sheet 1b can be bent, for example, in a curved shape that defines an interior volume (such as an inverted U-shape). In particular, each sheet can be bent at the location after each sheet has been transported to the location in the planar shape.

In some implementations, the LED support sheet 1a and the light scattering sheet 1b can be attached to each other using the spacers described earlier. For example, the sheets, in their respective planar shapes, can be attached using the spacers and transported to the location for assembly. At the location, both sheets can be simultaneously bent into their respective curved shapes to form the double-walled tunnel.

At 508, the bent light scattering sheet can be positioned within the interior volume defined by the bent LED support sheet. In this manner, the bent light scattering sheet forms an interior wall of the double-walled tunnel and the bent LED support sheet forms an outer wall of the double-walled tunnel. As described earlier, multiple light sources are attached to the LED support sheet. These light sources are positioned in the space between the LED support sheet and the light scattering sheet. When turned on, light from the multiple light sources is scattered by the bent light scattering sheet and illuminates an interior volume defined by the bent light scattering sheet.

Also as described above, a support structure 7 holds the bent LED support sheet and the bent light scattering sheet in the bent configuration. To do so, the support structure 7 includes two pairs of abutment elements. The first pair of abutment elements 8a are positioned adjacent opposite edges of the support structure 7. For example, each abutment element is a groove formed by two spaced-apart structures projecting from, for example, perpendicular to, a surface of the support structure. The spacing between the two structures is greater than or equal to a thickness of the LED support sheet 1a. After bending the LED support sheet, the opposing edges are positioned within the respective pair of abutment elements 8a. The second pair of abutment elements 8b are positioned between the first pair of abutment elements 8a. That is, a first of the second pair of abutment elements 8b is positioned next to a first of the first pair of abutment elements 8a, and a second of the second pair of abutment elements 8b is positioned next to a second of the first pair of abutment elements 8a. Here too, each abutment element is a groove formed by two spaced-apart structures projecting from, for example, perpendicular to, the surface of the support structure. The spacing between the two structures is greater than or equal to a thickness of the light scattering sheet 1b. After bending the light scattering sheet, the opposing edges are positioned within the respective pair of abutment elements 8b.

The first pair of abutment elements and the second pair of abutment elements project in the same direction from the surface of the support structure. Moreover, the projection need not be perpendicular to the surface. Instead, the projection can be angled such that the grooves can receive and accommodate the curved sheets.

Once each sheet is positioned within the respective pair of abutment elements, the support structure retains the double-walled tunnel in the curved configuration.

In some implementations, a longitudinal length of the support structure can be equal to a longitudinal length of each sheet. In such implementations, the abutment elements can span the longitudinal length of the support structure. Alternatively, multiple abutment elements can be spaced apart along the longitudinal length of the support structure.

In some implementations, the longitudinal length of the support structure can be less than the longitudinal length of each sheet. In such implementations, multiple support structures, spaced apart along the longitudinal length of each sheet, can be used to receive each sheet and retain the double-walled tunnel in the curved configuration. Abutment elements can span either the entire length of each support structure. Or, multiple abutment elements can be spaced apart along the entire length of each support structure.

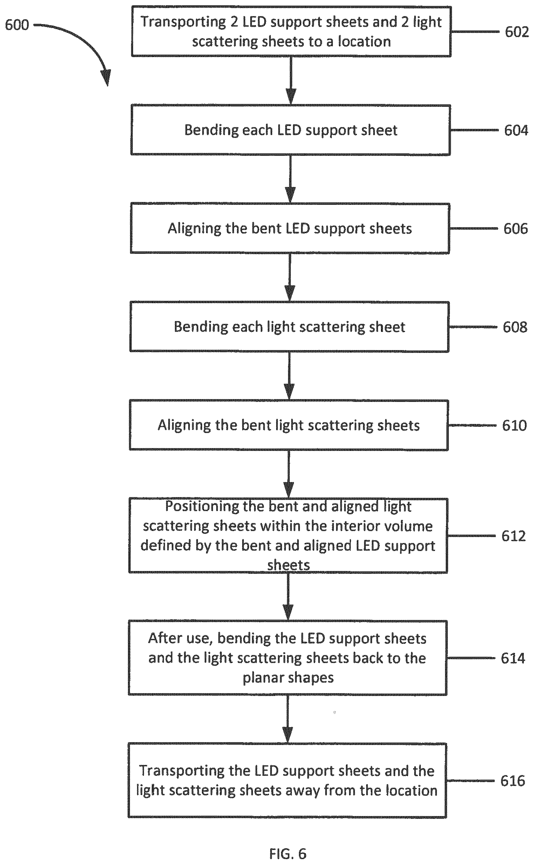

Figure 6 is a flowchart of an example of a process 600 of forming the tunnel. The process 600 can be implemented, for example, to form the tunnel described above with reference to Figure 3. At 602, the two LED support sheets and two light scattering sheets are transported to a location, for example, a location at which the tunnel is to be formed and used. Each sheet is in a planar shape, which is a relaxed state of each sheet. In the planar state, the sheets can be transported, for example, on the bed of a flatbed truck or other suitable vehicle to a location at which the tunnel is to be formed. At 604, each LED support sheet can be bent, for example, in a curved shape (such as an inverted L-shape). At 606, a longitudinal edge of the first bent LED support sheet is aligned with a longitudinal edge of the second bent LED support sheet. Once aligned, the two bent LED support sheets together define a curved shape (such as an inverted U-shape). At 608, each light scattering sheet can be bent, for example, in a curved shape that defines an interior volume (such as an inverted L-shape). At 610, a longitudinal edge of the first bent light scattering sheet is aligned with a longitudinal edge of the second bent light scattering sheet. Once aligned, the two bent light scattering sheets together define a curved shape (such as an inverted U-shape). At 612, the bent and aligned first and second light scattering sheets are positioned within an interior volume defined by the bent and aligned first and second LED support sheets. Together, the two light scattering sheets form the interior wall of the double-walled tunnel, while the two LED support sheets form the outer wall of the double-walled tunnel. In particular, each sheet can be bent at the location after each sheet has been transported to the location in the planar shape.

In some implementations, the frame (described earlier) that defines an internal volume formed by an arrangement of a first wall element 7a, a second wall element 7a and a roof element 7b. The double-walled tunnel is attached to the frame within the internal volume defined by the frame. Each wall element spans a longitudinal length of the double-walled tunnel. An edge of the first wall element includes a pair of abutment elements, for example, grooves similar to those described earlier with reference to Figure 5. For example, the abutment elements can be at the foot of the first wall element and include two grooves to receive an edge of the first LED support sheet and an edge of the first light scattering sheet. An edge of the second wall element includes another pair of abutment elements, for example, grooves similar to those described earlier with reference to Figure 4. For example, the abutment elements can be at the foot of the second wall element and include two grooves to receive an edge of the second LED support sheet and an edge of the first light scattering sheet. The roof element includes four guide elements, each being a groove. Two of the guide elements face the first wall element, while the other two face the second wall element. The two grooves facing the first wall element can receive opposite edges of the first LED support sheet and the first light scattering sheet. The two grooves facing the second wall element can receive opposite edges of the second LED support sheet and the second light scattering sheet. In this manner, the inverted L-shape of the two LED support sheets can form an inverted U-shape that can fit in the internal volume of the frame. Similarly, the inverted L-shape of the two light scattering sheets can form an inverted U-shape that can also fit in the internal volume of the frame.

In some aspects, a method includes bending a light emitting diode (LED) support sheet from a planar shape to a curved shape, wherein the planar shape is a relaxed state of the LED support sheet, wherein a plurality of light sources are attached to the LED support sheet. The method includes bending a light scattering sheet from a planar shape to a curved shape, wherein the planar shape is a relaxed state of the light scattering sheet. The method includes positioning the bent light scattering sheet within an interior volume defined by the bent LED support sheet, wherein the bent light scattering sheet forms an interior wall of a double-walled tunnel, wherein the bent LED support sheet forms an outer wall of the double-walled tunnel, wherein, in an on state, light from the plurality of light sources is scattered by the bent light scattering sheet and illuminates an interior volume defined by the bent light scattering sheet.

In aspects combinable with any of the other aspects, the method includes, after bending the LED support sheet to the curved shape, holding the LED support sheet in the curved shape by attaching the bent LED support sheet to a support structure. The method includes, after bending the LED support sheet to the curved shape, holding the light scattering sheet in the curved shape by attaching the bent light scattering sheet to the support structure.

In aspects combinable with any of the other aspects, the support structure includes a first pair of abutment elements positioned adjacent opposite edges of the support structure. Opposite edges of the bent LED support sheet are attached to the first pair of abutment elements, respectively.

In aspects combinable with any of the other aspects, the first pair of abutment elements includes a first pair of grooves, each defining a space equal to or greater than a thickness of an edge of the bent LED support sheet. The opposite edges of the bent LED support sheet are positioned within the first pair of grooves, respectively.

In aspects combinable with any of the other aspects, the support structure includes a second pair of abutment elements positioned on the support structure between the first pair of abutment elements. Opposite edges of the bent light scattering sheet are attached to the second pair of abutment elements, respectively.

In aspects combinable with any of the other aspects, the second pair of abutment elements include a second pair of grooves, each defining a space equal to or greater than a thickness of an edge of the bent light scattering sheet. The opposite edges of the bent light scattering sheet are positioned within the second pair of grooves, respectively.

In aspects combinable with any of the other aspects, the support structure is a first support structure. The method includes attaching the bent LED support sheet and the bent light scattering sheet to a second support structure positioned away from the first support structure along a longitudinal axis of the double-walled tunnel.

In aspects combinable with any of the other aspects, the double-walled tunnel is formed at a location. The method includes transporting the LED support sheet in the planar shape and the light scattering sheet in the planar shape to the location to form the double-walled tunnel.

In aspects combinable with any of the other aspects, the planar shaped LED support sheet and the planar shaped light scattering sheet are bent to the respective curved shapes after being transported to the location.

In aspects combinable with any of the other aspects, the method includes bending the bent LED support sheet and the bent light scattering sheet back to the respective planar shapes, and transporting the planar shaped LED support sheet and the planar shaped light scattering sheet away from the location.

In aspects combinable with any of the other aspects, the method includes spacing the bent LED support sheet and the bent light scattering sheet using multiple spacers spaced apart along a region formed between an inner surface of the bent LED support sheet and an outer surface of the bent light scattering sheet.

In aspects combinable with any of the other aspects, each spacer is attached to the bent LED support sheet and extends towards the bent light scattering sheet.

In aspects combinable with any of the other aspects, the planar shaped LED support sheet and the planar shaped light scattering sheet are bent simultaneously to form the double-walled tunnel.

In some aspects, a method includes bending a first light emitting diode (LED) support sheet from a planar shape to a curved shape, wherein the planar shape is a relaxed state of the first LED support sheet. Multiple light sources are attached to the first LED support sheet. The method includes bending a second LED support sheet from a planar shape to a curved shape. The planar shape is a relaxed state of the second LED support sheet. Multiple light sources are attached to the second LED support sheet. The method includes aligning a longitudinal edge of the first bent LED support sheet with a longitudinal edge of the second bent LED support sheet. The method includes bending a first light scattering sheet from a planar shape to a curved shape. The planar shape is a relaxed state of the first light scattering sheet. The method includes bending a second light scattering sheet from a planar shape to a curved shape, wherein the planar shape is a relaxed state of the second light scattering sheet. The method includes aligning a longitudinal edge of the first bent light scattering sheet with a longitudinal edge of the second light scattering sheet. The method includes positioning the bent and aligned first and second light scattering sheets within the interior volume defined by the bent and aligned first and second LED support sheets. The bent and aligned first and second light scattering sheets form an interior wall of a double-walled tunnel. The bent and aligned first and second LED support sheets forms an outer wall of the double-walled tunnel. Light from the multiple light sources is scattered by the bent and aligned first and second light scattering sheets and illuminates an interior volume defined by the bent and aligned first and second light scattering sheets.

In aspects combinable with any of the other aspects, the method includes forming a frame defining an internal volume. The frame includes a first wall element, a second wall element and a roof element connecting the first wall element and the second wall element. The frame includes attaching the double walled tunnel to the frame within the internal volume defined by the frame.

In aspects combinable with any of the other aspects, the internal volume is substantially U-shaped.

In aspects combinable with any of the other aspects, each wall element spans a longitudinal length of the double-walled tunnel.

In aspects combinable with any of the other aspects, an edge of the first wall element includes a first pair of abutment elements. A first edge of the first LED support sheet is attached to a first of the first pair of abutment elements. A first edge of the first light scattering sheet is attached to a second of the first pair of abutment elements. The first of the first pair of abutment elements is nearer the edge of the first wall element than the second of the first pair of abutment elements.

In aspects combinable with any of the other aspects, an edge of the second wall element includes a second pair of abutment elements. A first edge of the second LED support sheet opposite is attached to a first of the second pair of abutment elements. A first edge of the second light scattering sheet is attached to a second of the second pair of abutment elements. The first of the second pair of abutment elements is nearer the edge of the second wall element than the second of the second pair of abutment elements.

In aspects combinable with any of the other aspects, multiple guide elements are attached to the roof element. A second edge of the first LED support sheet opposite the first edge of the first LED support sheet is received in a first guide element. A second edge of the second LED support sheet opposite the first edge of the second LED support sheet is received in a second guide element. A second edge of the first light scattering sheet opposite the first edge of the first light scattering sheet is received in a third guide element. A second edge of the second light scattering sheet opposite the first edge of the second light scattering sheet is received in a fourth guide element.

In aspects combinable with any of the other aspects, the double-walled tunnel is formed at a location. The method includes transporting the first and second LED support sheets in the respective planar shapes and the first and second light scattering sheets in the respective planar shapes to the location to form the double-walled tunnel.

In aspects combinable with any of the other aspects, the method includes transporting the first wall element, the second wall element and the roof element individually and in a disconnected state to the location, and assembling the frame at the location.

In aspects combinable with any of the other aspects, each planar shaped LED support sheet and each planar shaped light scattering sheet is bent to the respective curved shapes after being transported to the location.

In aspects combinable with any of the other aspects, the method includes bending each bent LED support sheet and each bent light scattering sheet back to the respective planar shapes, disassembling the frame to disconnect the first wall element, the second wall element and the roof element from each other, and transporting each planar shaped LED support sheet, each planar shaped light scattering sheet, the first wall element, the second wall element and the roof element away from the location.

## Claims

1. Mobile inspection tunnel for illuminating reflective surfaces of objects positioned in the inner inspection area of the tunnel, the tunnel having opposite openings on both ends, the openings being spaced along the longitudinal extension of the tunnel, the tunnel comprising at least one modular tunnel element between the openings, each modular tunnel element having a double-walled tunnel (1) wall spanning the inner inspection area, the tunnel wall comprising:
a. at least one LED support sheet (1a),
i. the at least one LED support sheet forming the exterior wall of the double-walled tunnel wall (1),
ii. the at least one LED support sheet (1a) being at least partially curved,
iii. the at least one LED support sheet (1a) supporting a plurality of electrically controllable light sources (2) arranged on the interior surface of the sheet (1a) and configured to emit light towards the inner inspection area,
b. at least one translucent light scattering sheet (1b),
i. the at least one light scattering sheet (1b) forming the interior wall of the double-walled tunnel wall (1),
ii. the at least one light scattering sheet (1b) being at least partially curved,
iii. the at least one light scattering sheet (1b) being arranged on the inside of the LED support sheet (1a) in a distance to the LED support sheet (1a) along its entire extension,
iv. the at least one light scattering sheet (1b) being configured to be illuminated by the light emitted from the light sources (2) of the LED support sheet (1a) and to scatter the light towards the inspection area,
**characterized in that**
the curved area of the LED support sheet (1a) is formed into the material of the LED support sheet (1a) by elastically bending the LED support sheet (1a) from a relaxed planar shape into a bent curved state and the curved area of the light scattering sheet (1b) is formed into the material of the light scattering sheet (1b) by elastically bending the light scattering sheet (1b) from a relaxed planar shape into a bent curved state, both sheets (1a, 1b) being held in a bent shape by means of a support structure (7) of the modular tunnel element to which at least the LED support sheet (1a) is attached, particularly the bent light scattering sheet (1b) being supported by the bent LED support sheet (1a).

2. Tunnel according to claim 1, **characterized in that** each tunnel element forms an illumination device having
a. a homogeneous light intensity distribution over the entire surface of the light scattering sheet (1b) with less than 30% intensity variation if illuminated by all light emitting diodes (2) simultaneously and/or
b. a sinusoidal light intensity distribution over the entire surface of the light scattering sheet (1b) in at last one direction if the light scattering sheet (1b) is illuminated with a subset of all light emitting diodes (2) if all switched-on light emitting diodes (2) of this subset are spaced to each other **in that** direction by at least one non-illuminated light diode (2).

3. Tunnel according to anyone of the preceding claims, **characterized in that** the LED support sheet (1a) and the light scattering sheet (1b) are configured to automatically relax into its respective planar shape after detaching from the support structure (7).

4. Tunnel according to anyone of the preceding claims, **characterized in that** the light scattering sheet (1b) comprises a plurality of spacer elements (3) extending from the light scattering sheet (1b) towards the LED support sheet (1a) or the LED support sheet (1a) comprises a plurality of spacer elements (3) extending from the LED support sheet (1a) towards the light scattering sheet (1b), preferably each spacer (3) has a tapered free end.

5. Tunnel according to anyone of the preceding claims, **characterized in that** the support structure (7) of a modular tunnel element comprises an exterior frame (7a, 7b) spanning the double-walled tunnel wall (1), the LED support sheet (1a) being arranged on the inside of the frame (7a, 7b), the frame (7a, 7b) comprising two spaced wall elements (7a) being arranged parallel to each other in the longitudinal extension of the tunnel element and connected at their respective upper ends by means of a roof element (7b), these elements (7a, 7b) together forming an essentially U-shaped frame structure, each wall (7a) or roof element (7b) of the frame structure being composed of several interconnected rods, thus forming an open-meshed frame structure.

6. Tunnel according to anyone of the preceding claims, **characterized in that** the at least one LED support sheet (1a) and / or the at least one light scattering sheet (1b) are attached to the frame (7a, 7b) by clamping or by inserting their edges (1c, 1d) being spaced in the circumferential direction into respective or common abutment elements (8a, 8b, 9) of the frame structure (7a, 7b).

7. Tunnel according to claim 6, **characterized in that** the frame (7a, 7b) of a modular tunnel element comprises a pair of spaced abutment elements (8a), particularly longitudinally extending groves for each respective LED support sheet (1a) and a pair of spaced abutment elements (8b), particularly longitudinally extending groves, for each respective light scattering sheet (1b), the abutment elements (8a, 8b) of each pair having a distance less than the respective distance of the opposing longitudinally extending edges (1c, 1d) of the respective sheets (1a, 1b) in their relaxed state and the respective sheets (1a, 1b) being held in a bent state by inserting their longitudinally extending edges (1c, 1d) into the abutment elements (8a, 8b) of the support structure (7).

8. Tunnel according to anyone of the preceding claims, **characterized in that** the at least one LED support sheet (1a) and/or the at least one light scattering sheet (1b) are held in an engaged state with the abutment elements (8a, 8b) and/or in contact with the frame (7) only by internal forces exerted from the respective sheet (1a, 1b) to the abutment elements (8a, 8b) and/or contacted surfaces of the frame (7) due to the elastic bending of the respective sheet (1a, 1b).

9. Tunnel according to anyone of the preceding claims, **characterized in that** in a tunnel element two or more LED support sheets (1a) and/or two or more light scattering sheets (1b) are successively arranged in the circumferential direction, preferably the upper ends of two sheets (1a, 1b) engaging a common abutment element (9) of the frame (7) and/or being connected to each other.

10. Tunnel according to anyone of the preceding claims, **characterized in that** the at least one LED support sheet (1a) and/or the at least one light scattering sheet (1b) comprises at least one aperture (10) and a camera (6) facing through the aperture (10) towards the inside of the tunnel element.

11. Tunnel according to anyone of the preceding claims, **characterized in that** in a LED support sheet (1a) each light source (2) is a combination of at least three, preferably four light emitting diodes, each light emitting diode being capable of emitting a different light spectrum, preferably the light sources of a row or column being arranged on a common stripe.

12. Tunnel according to anyone of the preceding claims, **characterized in that** the light sources (2) of a LED support sheet (1a) being positioned nearest to the edge opposite the edge of a neighbouring LED support sheet (1a) have a distance to this edge being half the distance between the light sources (2) on the remaining surface of the LED support sheet (1a).

13. Tunnel according to anyone of the preceding claims, **characterized in that** at least one of the edges of two opposite edges of neighbouring LED support sheets (1a) and/or light scattering sheets (1b) comprises at least one guide element (12) being engaged by the opposite edge, particularly to keep the neighbouring sheets (1a, 1b) aligned.

14. Tunnel according to anyone of the preceding claims, **characterized in that** it comprises a controller (11) configured for commonly controlling all the light emitting light sources (2) of several LED support sheets (1a), particularly for controlling the generation of specific light patterns extending un-interrupted along the circumferential and lengthwise extension of the several LED support sheets (1a).

15. A method comprising:
bending (504) a light emitting diode (LED) support sheet (1a) from a planar shape to a curved shape, wherein the planar shape is a relaxed state of the LED support sheet (1a), wherein a plurality of light sources (2) are attached to the LED support sheet (1a);
bending (506) a light scattering sheet (1b) from a planar shape to a curved shape, wherein the planar shape is a relaxed state of the light scattering sheet (1b); and
positioning (508) the bent light scattering sheet (1b) within an interior volume defined by the bent LED support sheet (1a), wherein the bent light scattering sheet (1b) forms an interior wall of a double-walled tunnel (1), wherein the bent LED support sheet (1a) forms an outer wall of the double-walled tunnel (1), wherein, in an on state, light from the plurality of light sources (2)is scattered by the bent light scattering sheet (1b) and illuminates an interior volume defined by the bent light scattering sheet (1b).

## Patentansprüche

1. Mobiler Inspektionstunnel zum Beleuchten reflektierender Oberflächen von Objekten, die im inneren Inspektionsbereich des Tunnels positioniert sind, wobei der Tunnel an den beiden Enden gegenüberliegende Öffnungen aufweist, die entlang der Längsausdehnung des Tunnels beabstandet sind, wobei der Tunnel wenigstens ein modulares Tunnelelement zwischen den Öffnungen umfasst, wobei jedes modulare Tunnelelement eine doppelwandige Tunnelwand (1) aufweist, die den inneren Inspektionsbereich überspannt, wobei die Tunnelwand umfasst:
a. wenigstens eine LED-Trägerplatte (1a),
i. wobei die wenigstens eine LED-Trägerplatte die Außenwand der doppelwandigen Tunnelwand bildet (1),
ii. wobei die wenigstens eine LED-Trägerplatte (1a) wenigstens teilweise gekrümmt ist,
iii. wobei die wenigstens eine LED-Trägerplatte (1a) mehrere elektrisch steuerbare Lichtquellen (2) trägt, die auf der Innenfläche der Platte (1a) angeordnet und dafür ausgelegt sind, Licht in Richtung des inneren Inspektionsbereichs abzustrahlen,
b. wenigstens eine lichtdurchlässige, Licht streuende Platte (1b),
i. wobei die wenigstens eine Licht streuende Platte (1b) die Innenwand der doppelwandigen Tunnelwand (1) bildet,
ii. wobei die wenigstens eine Licht streuende Platte (1b) wenigstens teilweise gekrümmt ist,
iii.wobei die wenigstens eine Licht streuende Platte (1b) auf der Innenseite der LED-Trägerplatte (1a) in einem Abstand zur LED-Trägerplatte (1a) entlang seiner gesamten Ausdehnung angeordnet ist,
iv. wobei die wenigstens eine Licht streuende Platte (1b) dafür ausgelegt ist, durch das von den Lichtquellen (2) der LED-Trägerplatte (1a) abgestrahlte Licht beleuchtet zu werden und das Licht in Richtung des Inspektionsbereichs zu streuen,
**dadurch gekennzeichnet, dass**
der gekrümmte Bereich der LED-Trägerplatte (1a) in das Material der LED-Trägerplatte (1a) durch elastisches Biegen der LED-Trägerplatte (1a) aus einer entspannten planaren Form in einen gebogenen gekrümmten Zustand geformt wird und der gekrümmte Bereich der Licht streuenden Platte (1b) in das Material der Licht streuenden Platte (1b) durch elastisches Biegen der Licht streuenden Platte (1b) aus einer entspannten planaren Form in einen gebogenen gekrümmten Zustand geformt wird, wobei beide Platten (1a, 1b) mittels einer Stützstruktur (7) des modularen Tunnelelements, an der wenigstens die LED-Trägerplatte (1a) befestigt ist, in einer gebogenen Form gehalten werden, wobei insbesondere die gebogene, Licht streuende Platte (1b) durch die gebogene LED-Trägerplatte (1a) gehalten wird.

2. Tunnel gemäß Anspruch 1, **dadurch gekennzeichnet, dass** jedes Tunnelelement eine Beleuchtungsvorrichtung bildet, aufweisend
a. eine homogene Lichtintensitätsverteilung über die gesamte Oberfläche der Licht streuenden Platte (1b) mit weniger als 30 % Intensitätsschwankung, wenn sie von allen Leuchtdioden (2) gleichzeitig beleuchtet wird, und/oder
b. eine sinusförmige Lichtintensitätsverteilung über die gesamte Oberfläche der Licht streuenden Platte (1b) in wenigstens einer Richtung, wenn die Licht streuende Platte (1b) mit einer Teilmenge aller Leuchtdioden (2) beleuchtet wird, wenn alle eingeschalteten Leuchtdioden (2) dieser Teilmenge in dieser Richtung durch wenigstens eine nicht beleuchtete Leuchtdiode (2) voneinander beabstandet sind.

3. Tunnel gemäß einem der vorstehenden Ansprüche, **dadurch gekennzeichnet, dass** die LED-Trägerplatte (1a) und die Licht streuende Platte (1b) dafür ausgelegt sind, sich nach dem Lösen von der Stützstruktur (7) automatisch in ihre jeweilige planare Form zu entspannen.

4. Tunnel gemäß einem der vorstehenden Ansprüche, **dadurch gekennzeichnet, dass** die Licht streuende Platte (1b) mehrere Abstandselemente (3) umfasst, die sich von der Licht streuenden Platte (1b) in Richtung der LED-Trägerplatte (1a) erstrecken, oder die LED-Trägerplatte (1a) mehrere Abstandselemente (3) umfasst, die sich von der LED-Trägerplatte (1a) in Richtung der Licht streuenden Platte (1b) erstrecken, wobei vorzugsweise jedes Abstandselement (3) ein verjüngtes freies Ende aufweist.

5. Tunnel gemäß einem der vorstehenden Ansprüche, **dadurch gekennzeichnet, dass** die Stützstruktur (7) eines modularen Tunnelelements einen äußeren Rahmen (7a, 7b) umfasst, der die doppelwandige Tunnelwand (1) überspannt, wobei die LED-Trägerplatte (1a) auf der Innenseite des Rahmens (7a, 7b) angeordnet ist, wobei der Rahmen (7a, 7b) zwei beabstandete Wandelemente (7a) umfasst, die in der Längsausdehnung des Tunnelelements parallel zueinander angeordnet und an ihren jeweiligen oberen Enden mittels eines Dachelements (7b) verbunden sind, wobei diese Elemente (7a, 7b) zusammen eine im wesentlichen U-förmige Rahmenstruktur bilden, wobei jedes Wand- (7a) oder Dachelement (7b) der Rahmenstruktur aus mehreren miteinander verbundenen Stäben zusammengesetzt ist und so eine offenmaschige Rahmenstruktur bildet.

6. Tunnel gemäß einem der vorstehenden Ansprüche, **dadurch gekennzeichnet, dass** die wenigstens eine LED-Trägerplatte (1a) und/oder die wenigstens eine Licht streuende Platte (1b) an dem Rahmen (7a, 7b) durch Klemmen oder durch Einsetzen ihrer in Umfangsrichtung beabstandeten Ränder (1c, 1d) in jeweilige oder gemeinsame Anschlagelemente (8a, 8b, 9) der Rahmenstruktur (7a, 7b) befestigt sind.

7. Tunnel gemäß Anspruch 6, **dadurch gekennzeichnet, dass** der Rahmen (7a, 7b) eines modularen Tunnelelements ein Paar beabstandeter Anschlagelemente (8a), insbesondere längs verlaufende Rillen, für jede entsprechende LED-Trägerplatte (1a) sowie ein Paar beabstandeter Anschlagelemente (8b), insbesondere längs verlaufende Rillen, für jede entsprechende Licht streuende Platte (1b) umfasst, wobei die Anschlagelemente (8a, 8b) jedes Paares einen Abstand aufweisen, der geringer ist als der jeweilige Abstand der gegenüberliegenden in Längsrichtung verlaufenden Kanten (1c, 1d) der jeweiligen Platten (1a, 1b) in ihrem entspannten Zustand, und wobei die jeweiligen Platten (1a, 1b) in einem gebogenen Zustand gehalten werden, indem ihre in Längsrichtung verlaufenden Kanten (1c, 1d) in die Anschlagelemente (8a, 8b) der Stützstruktur (7) eingesetzt werden.

8. Tunnel gemäß einem der vorstehenden Ansprüche, **dadurch gekennzeichnet, dass** die wenigstens eine LED-Trägerplatte (1a) und/oder die wenigstens eine Licht streuende Platte (1b) nur durch innere Kräfte, die aufgrund der elastischen Biegung der jeweiligen Platte (1a, 1b) von der jeweiligen Platte (1a, 1b) auf die Anschlagelemente (8a, 8b) und/oder auf die Kontaktflächen des Rahmens (7) ausgeübt werden, in einem Eingriffszustand mit den Anschlagelementen (8a, 8b) und/oder in Kontakt mit dem Rahmen (7) gehalten werden.

9. Tunnel gemäß einem der vorstehenden Ansprüche, **dadurch gekennzeichnet, dass** in einem Tunnelelement zwei oder mehr LED-Trägerplatten (1a) und/oder zwei oder mehr Licht streuende Platten (1b) in Umfangsrichtung hintereinander angeordnet sind, wobei vorzugsweise die oberen Enden zweier Platten (1a, 1b) in ein gemeinsames Anschlagelement (9) des Rahmens (7) eingreifen und/oder miteinander verbunden sind.

10. Tunnel gemäß einem der vorstehenden Ansprüche, **dadurch gekennzeichnet, dass** die wenigstens eine LED-Trägerplatte (1a) und/oder die wenigstens eine Licht streuende Platte (1b) wenigstens eine Öffnung (10) und eine Kamera (6), die durch die Öffnung (10) in das Innere des Tunnelelements gerichtet ist, umfassen.

11. Tunnel gemäß einem der vorstehenden Ansprüche, **dadurch gekennzeichnet, dass** in einer LED-Trägerplatte (1a) jede Lichtquelle (2) eine Kombination von wenigstens drei, vorzugsweise vier Leuchtdioden ist, wobei jede Leuchtdiode in der Lage ist, ein anderes Lichtspektrum abzustrahlen, wobei vorzugsweise die Lichtquellen einer Reihe oder Spalte auf einem gemeinsamen Streifen angeordnet sind.

12. Tunnel gemäß einem der vorstehenden Ansprüche, **dadurch gekennzeichnet, dass** die Lichtquellen (2) einer LED-Trägerplatte (1a), die am nächsten zu der Kante angeordnet sind, die der Kante einer benachbarten LED-Trägerplatte (1a) gegenüberliegt, einen Abstand zu dieser Kante aufweisen, der die Hälfte des Abstands zwischen den Lichtquellen (2) auf der verbleibenden Oberfläche der LED-Trägerplatte (1a) beträgt.

13. Tunnel gemäß einem der vorstehenden Ansprüche, **dadurch gekennzeichnet, dass** wenigstens eine der Kanten von zwei gegenüberliegenden Kanten benachbarter LED-Trägerplatten (1a) und/oder Licht streuender Platten (1b) wenigstens ein Führungselement (12) umfasst, in das die gegenüberliegende Kante eingreift, insbesondere um die benachbarten Platten (1a, 1b) gefluchtet zu halten.

14. Tunnel gemäß einem der vorstehenden Ansprüche, **dadurch gekennzeichnet, dass** er eine Steuerung (11) umfasst, die dafür ausgelegt ist, alle Licht abstrahlenden Lichtquellen (2) mehrerer LED-Trägerplatten (1a) gemeinsam zu steuern, insbesondere zum Steuern der Erzeugung von spezifischen Lichtmustern, die sich ununterbrochen entlang der Umfangs- und der Längsausdehnung der mehreren LED-Trägerplatten (1a) erstrecken.

15. Verfahren, umfassend:
Biegen (504) einer Leuchtdioden (LED)-Trägerplatte (1a) von einer planaren Form in eine gekrümmte Form, wobei die planare Form ein entspannter Zustand der LED-Trägerplatte (1a) ist, wobei mehrere Lichtquellen (2) an der LED-Trägerplatte (1a) angebracht sind;
Biegen (506) einer Licht streuenden Platte (1b) von einer planaren Form in eine gekrümmte Form, wobei die planare Form ein entspannter Zustand der Licht streuenden Platte (1b) ist; und
Anordnen (508) der gebogenen, Licht streuenden Platte (1b) innerhalb eines Innenvolumens, das durch die gebogene LED-Trägerplatte (1a) definiert ist, wobei die gebogene, Licht streuende Platte (1b) eine Innenwand eines doppelwandigen Tunnels (1) bildet, wobei die gebogene LED-Trägerplatte (1a) eine Außenwand des doppelwandigen Tunnels (1) bildet, wobei in einem eingeschalteten Zustand Licht von den mehreren Lichtquellen (2) durch die gebogene, Licht streuende Platte (1b) gestreut wird und ein Innenvolumen beleuchtet, das durch die gebogene, Licht streuende Platte (1b) definiert ist.

## Revendications

1. Tunnel d'inspection mobile pour éclairer des surfaces réfléchissantes d'objets positionnés dans la zone d'inspection intérieure du tunnel, le tunnel ayant des ouvertures opposées aux deux extrémités, les ouvertures étant espacées le long de l'extension longitudinale du tunnel, le tunnel comprenant au moins un élément de tunnel modulaire entre les ouvertures, chaque élément de tunnel modulaire ayant une paroi de tunnel à double paroi (1) couvrant la zone d'inspection intérieure, la paroi du tunnel comprenant :
a. au moins une feuille de support de DEL (la),
i. l'au moins une feuille de support de DEL formant la paroi extérieure de la paroi de tunnel à double paroi (1),
ii. l'au moins une feuille de support de DEL (1a) étant au moins partiellement courbée,
iii. l'au moins une feuille de support de DEL (1a) supportant une pluralité de sources lumineuses (2) pouvant être commandées électriquement, agencées sur la surface intérieure de la feuille (1a) et configurées pour émettre de la lumière vers la zone d'inspection intérieure,
b. au moins une feuille de diffusion de la lumière translucide (1b),
i. l'au moins une feuille de diffusion de la lumière (1b) formant la paroi intérieure de la paroi de tunnel à double paroi (1),
ii. l'au moins une feuille de diffusion de la lumière (1b) étant au moins partiellement courbée,
iii. l'au moins une feuille de diffusion de la lumière (1b) étant agencée à l'intérieur de la feuille de support de DEL (1a) à une certaine distance de la feuille de support de DEL (1a) sur toute son étendue,
iv. l'au moins une feuille de diffusion de la lumière (1b) étant configurée pour être éclairée par la lumière émise par les sources lumineuses (2) de la feuille de support de DEL (1a) et pour diffuser la lumière vers la zone d'inspection,
**caractérisé en ce que**
la zone courbée de la feuille de support de DEL (1a) est formée dans le matériau de la feuille de support de DEL (1a) en pliant élastiquement la feuille de support de DEL (1a) d'une forme plane détendue à un état courbé plié et la zone courbée de la feuille de diffusion de la lumière (1b) est formée dans le matériau de la feuille de diffusion de la lumière (1b) en pliant élastiquement la feuille de diffusion de la lumière (1b) d'une forme plane détendue à un état courbé plié, les deux feuilles (1a, 1b) étant maintenues en forme pliée au moyen d'une structure de support (7) de l'élément de tunnel modulaire à laquelle est fixée au moins la feuille de support de DEL (1a), en particulier la feuille de diffusion de la lumière pliée (1b) qui est soutenue par la feuille de support de DEL (1a) pliée.

2. Tunnel selon la revendication 1, **caractérisé en ce que** chaque élément de tunnel forme un dispositif d'éclairage ayant :
a. une répartition homogène de l'intensité lumineuse sur toute la surface de la feuille de diffusion de la lumière (1b) avec une variation d'intensité inférieure à 30 % si elle est éclairée par toutes les diodes électroluminescentes (2) simultanément et/ou
b. une répartition sinusoïdale de l'intensité lumineuse sur toute la surface de la feuille de diffusion de la lumière (1b) dans au moins une direction si la feuille de diffusion de la lumière (1b) est éclairée par un sous-ensemble de toutes les diodes électroluminescentes (2) si toutes les diodes électroluminescentes allumées (2) de ce sous-ensemble sont espacées les unes des autres dans cette direction par au moins une diode électroluminescente non allumée (2).

3. Tunnel selon l'une quelconque des revendications précédentes, **caractérisé en ce que** la feuille de support de DEL (1a) et la feuille de diffusion de la lumière (1b) sont configurées pour se détendre automatiquement dans leur forme plane respective après s'être détachées de la structure de support (7).

4. Tunnel selon l'une quelconque des revendications précédentes, **caractérisé en ce que** la feuille de diffusion de la lumière (1b) comprend une pluralité d'éléments d'espacement (3) s'étendant à partir de la feuille de diffusion de la lumière (1b) vers la feuille de support de DEL (1a), ou la feuille de support de DEL (1a) comprend une pluralité d'éléments d'espacement (3) s'étendant à partir de la feuille de support de DEL (1a) vers la feuille de diffusion de la lumière (1b), de préférence chaque élément d'espacement (3) a une extrémité libre conique.

5. Tunnel selon l'une quelconque des revendications précédentes, **caractérisé en ce que** la structure de support (7) d'un élément de tunnel modulaire comprend un cadre extérieur (7a, 7b) couvrant la paroi de tunnel à double paroi (1), la feuille de support de DEL (1a) étant agencée sur l'intérieur du cadre (7a, 7b), le cadre (7a, 7b) comprenant deux éléments de paroi espacés (7a) agencés parallèlement l'un à l'autre dans le prolongement longitudinal de l'élément de tunnel et reliés à leurs extrémités supérieures respectives au moyen d'un élément de toit (7b), ces éléments (7a, 7b) formant ensemble une structure de cadre essentiellement en forme de U, chaque élément de paroi (7a) ou de toit (7b) de la structure de cadre étant composé de plusieurs tiges interconnectées, formant ainsi une structure de cadre à mailles ouvertes.

6. Tunnel selon l'une quelconque des revendications précédentes, **caractérisé en ce que** l'au moins une feuille de support de DEL (1a) et/ou l'au moins une feuille de diffusion de la lumière (1b) sont fixées au cadre (7a, 7b) par serrage ou par insertion de leurs bords (1c, 1d) espacés dans la direction circonférentielle dans des éléments de butée respectifs ou communs (8a, 8b, 9) de la structure de cadre (7a, 7b).

7. Tunnel selon la revendication 6, **caractérisé en ce que** le cadre (7a, 7b) d'un élément de tunnel modulaire comprend une paire d'éléments de butée espacés (8a), en particulier des rainures s'étendant longitudinalement pour chaque feuille de support de DEL respective (1a) et une paire d'éléments de butée espacés (8b), en particulier des rainures s'étendant longitudinalement, pour chaque feuille de diffusion de la lumière respective (1b), les éléments de butée (8a, 8b) de chaque paire ayant une distance inférieure à la distance respective des bords opposés s'étendant longitudinalement (1c, 1d) des feuilles respectives (1a, 1b) dans leur état détendu et les feuilles respectives (1a, 1b) étant maintenues dans un état plié en insérant leurs bords s'étendant longitudinalement (1c, 1d) dans les éléments de butée (8a, 8b) de la structure de support (7).

8. Tunnel selon l'une quelconque des revendications précédentes, **caractérisé en ce que** l'au moins une feuille de support de DEL (1a) et/ou l'au moins une feuille de diffusion de la lumière (1b) sont maintenues dans un état engagé avec les éléments de butée (8a, 8b) et/ou en contact avec le cadre (7) uniquement par des forces internes exercées par la feuille respective (1a, 1b) sur les éléments de butée (8a, 8b) et/ou les surfaces de contact du cadre (7) en raison du pliage élastique de la feuille respective (1a, 1b).

9. Tunnel selon l'une quelconque des revendications précédentes, **caractérisé en ce que**, dans un élément de tunnel, deux ou plus de deux feuilles de support de DEL (1a) et/ou deux ou plus de deux feuilles de diffusion de la lumière (1b) sont agencées successivement dans la direction circonférentielle, de préférence les extrémités supérieures de deux feuilles (1a, 1b) s'engageant dans un élément de butée commun (9) du cadre (7) et/ou étant reliées entre elles.

10. Tunnel selon l'une quelconque des revendications précédentes, **caractérisé en ce que** l'au moins une feuille de support de DEL (1a) et/ou l'au moins une feuille de diffusion de la lumière (1b) comprend au moins une ouverture (10) et une caméra (6) orientée à travers l'ouverture (10) vers l'intérieur de l'élément de tunnel.

11. Tunnel selon l'une quelconque des revendications précédentes, **caractérisé en ce que** dans une feuille de support de DEL (1a), chaque source lumineuse (2) est une combinaison d'au moins trois, de préférence quatre diodes électroluminescentes, chaque diode électroluminescente étant capable d'émettre un spectre de lumière différent, de préférence les sources lumineuses d'une rangée ou d'une colonne étant agencées sur une bande commune.

12. Tunnel selon l'une quelconque des revendications précédentes, **caractérisé en ce que** les sources lumineuses (2) d'une feuille de support de DEL (1a) étant positionnées le plus près du bord opposé au bord d'une feuille de support de DEL (1a) voisine ont une distance à ce bord qui est la moitié de la distance entre les sources lumineuses (2) sur la surface restante de la feuille de support de DEL (1a).

13. Tunnel selon l'une quelconque des revendications précédentes, **caractérisé en ce qu'**au moins l'un des bords de deux bords opposés de feuilles de support de DEL (1a) et/ou de feuilles de diffusion de la lumière (1b) voisines comprend au moins un élément de guidage (12) qui est engagé par le bord opposé, en particulier pour maintenir les feuilles voisines (1a, 1b) alignées.

14. Tunnel selon l'une quelconque des revendications précédentes, **caractérisé en ce qu'**il comprend un dispositif de commande (11) configuré pour commander en commun toutes les sources lumineuses (2) de plusieurs feuilles de support de DEL (1a), en particulier pour commander la génération de motifs lumineux spécifiques s'étendant sans interruption le long de l'extension circonférentielle et longitudinale des plusieurs feuilles de support de DEL (1a).

15. Procédé comprenant :
le pliage (504) d'une feuille de support (1a) de diodes électroluminescentes (DEL) d'une forme plane à une forme courbée, la forme plane étant un état relâché de la feuille de support de DEL (1a), une pluralité de sources lumineuses (2) étant fixées à la feuille de support de DEL (1a) ;
le pliage (506) d'une feuille de diffusion de la lumière (1b) d'une forme plane à une forme courbée, la forme plane étant un état relâché de la feuille de diffusion de la lumière (1b) ; et
le positionnement (508) de la feuille de diffusion de la lumière pliée (1b) dans un volume intérieur défini par la feuille de support de DEL pliée (1a), la feuille de diffusion de la lumière pliée (1b) formant une paroi intérieure d'un tunnel à double paroi (1), la feuille de support de DEL pliée (1a) formant une paroi extérieure du tunnel à double paroi (1), dans un état allumé, la lumière provenant de la pluralité de sources lumineuses (2) étant diffusée par la feuille de diffusion de la lumière pliée (1b) et éclairant un volume intérieur défini par la feuille de diffusion de la lumière pliée (1b).
